(19) **Europäisches Patentamt / European Patent Office / Office européen des brevets**

(11) **EP 4 644 227 A1**

(12) **EUROPEAN PATENT APPLICATION**
published in accordance with Art. 153(4) EPC

(43) Date of publication:
05.11.2025 Bulletin 2025/45

(21) Application number: 23912666.7

(22) Date of filing: 11.12.2023

(51) International Patent Classification (IPC):
$B63B\ 71/00^{(2020.01)}$ $\quad$ $B63B\ 25/16^{(2006.01)}$
$G06F\ 30/15^{(2020.01)}$ $\quad$ $F17C\ 13/00^{(2006.01)}$
$F17C\ 3/02^{(2006.01)}$ $\quad$ $B63B\ 25/08^{(2006.01)}$

(52) Cooperative Patent Classification (CPC):
B63B 25/08; B63B 25/16; B63B 71/00; F17C 3/02;
F17C 13/00; G06F 30/15

(86) International application number:
PCT/KR2023/020327

(87) International publication number:
WO 2024/143991 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.12.2022 KR 20220184205

(71) Applicant: Hanwha Ocean Co., Ltd.
Geoje-si, Gyeongsangnam-do 53302 (KR)

(72) Inventors:
• PARK, Seong Woo
  Geoje-si, Gyeongsangnam-do 53216 (KR)
• LEE, Jong Hyun
  Busan 49312 (KR)
• LEE, Yong Seok
  Geoje-si, Gyeongsangnam-do 53301 (KR)
• HWANG, Yoon Sik
  Geoje-si, Gyeongsangnam-do 53315 (KR)
• PARK, Sung Gun
  Seoul 03165 (KR)

(74) Representative: Cabinet Beau de Loménie
103, rue de Grenelle / CS 90800
75340 Paris Cedex 07 (FR)

(54) **INSULATION SYSTEM FOR STAND-ALONE TYPE B LIQUEFIED GAS STORAGE TANK, DESIGN METHOD THEREOF, AND SHIP INCLUDING SAME**

(57) Disclosed herein is a method of designing an insulation system for type B independent liquefied gas storage tanks. The design method includes: a liquefied gas selection step in which the type of liquefied gas is selected; a leakage standard setting step in which a leakage standard for the liquefied gas is set; a shape adoption step in which a shape of a partial secondary barrier is adopted; a setting and assessment step in which a target evaporation rate of the liquefied gas is set and a leakage amount of the liquefied gas is assessed; a comparison step in which the target evaporation rate of the liquefied gas is compared with the leakage amount of the liquefied gas; a shape design step in which the shape of the partial secondary barrier is designed; and an installation step in which the partial secondary barrier is installed.

[FIG. 5]

| | |
|---|---|
| Select liquefied gas | S100 |
| Set leakage standard | S200 |
| Adopt shape of partial secondary barrier | S300 |
| Set/assess target evaporation rate of liquefied gas | S400 |
| Compare target evaporation rate with leakage amount of liquefied gas | S500 |
| Specify shape of partial secondary barrier | S600 |
| Install partial secondary barrier | S700 |

EP 4 644 227 A1

# Description

[Technical Field]

The present invention relates to an insulation system for type B independent liquefied gas storage tanks, a method of designing the same, and a ship including the same and, more particularly, to an insulation system for type B independent liquefied gas storage tanks, which can completely vaporize leaked liquefied gas, can be manufactured in various forms, and can reflect changes at each procedural step by employing a partial secondary barrier manufactured based on the type and physical characteristics of liquefied gas leaked to the partial secondary barrier, a method of designing the same, and a ship including the same.

[Background Art]

Generally, natural gas is transported in a gaseous state through onshore or offshore gas pipelines, or is transported to distant consumers while stored in an LNG carrier in the form of liquefied natural gas (hereinafter, "LNG").

Storage tanks for liquefied gases, such as liquefied natural gas (LNG) and liquefied hydrogen ($LH_2$), and transportation means or structures including such storage tanks require a range of fittings and equipment for storage and management of a liquefied gas in the storage tank. Such fittings and equipment are required to meet all conditions, including temperature, pressure, and the like, necessary for storage and management of the liquefied gas and require a design that considers these conditions.

Technologies for storage of liquefied gases are typically classified into membrane tanks and independent tanks in accordance with classification standards specified in the IGC code or onshore tank technology. In particular, independent tanks can be classified into three main types: type A, type B, and type C, depending on the configuration method of a secondary barrier. In particular, for type B independent tanks, the secondary barrier is configured as a partial secondary barrier. Such a partial secondary barrier is required to have liquid tightness.

Type B independent tank used in ships are designed/manufactured in the form of a spherical tank, a prismatic tank, and the like, wherein a partial secondary barrier is installed at a lower end of the tank in the form of a drip tray connected to a channel through which leaked liquefied gas can be discharged.

Such a drip tray is securely installed on a bottom surface of the storage tank to catch a fluid (LNG) flowing downward due to gravity. In addition, the drip tray has an internal space and is installed at one or more locations on the bottom surface of the storage tank to collect a cryogenic fluid flowing downward.

Although such a drip tray serves to temporarily protect a hull for 15 days, the drip tray is required to have an excessively large size to contain a leaked cryogenic fluid in a liquid state during this period. Therefore, there is a need for a practical alternative utilizing the fact that gas tightness is not required.

In addition, when the bottom surface of the storage tank is relatively flat, complexity in a small space increases due to the necessity of installing multiple drip trays.

[Disclosure]

[Technical Problem]

Embodiments of the present invention are conceived to solve such problems in the art and it is one aspect of the present invention to provide an insulation system for liquefied gas storage tanks, which meets leakage standards by completely vaporizing leaked liquefied gas from a storage tank within a pipe-type partial secondary barrier instead of collecting the leaked liquefied gas using a typical drip tray-type partial secondary barrier.

It is another aspect of the present invention to provide an insulation system for liquefied gas storage tanks, which does not require excessive space for installation of a partial secondary barrier and is free from spatial constraints.

It is a further aspect of the present invention to manufacture various forms of partial secondary barriers by comparing a target evaporation rate of liquefied gas with an evaporation rate within an adopted pipe-type partial secondary barrier.

[Technical Solution]

In accordance with one aspect of the present invention, there is provided a method of designing an insulation system for type B independent liquefied gas storage tanks, comprising:

a liquefied gas selection step in which the type of liquefied gas is selected; a leakage standard setting step in which a leakage standard for the liquefied gas is set; a shape adoption step in which a shape of a partial secondary barrier is adopted; a setting and assessment step in which a target evaporation rate of the liquefied gas is set and a leakage amount of the liquefied gas is assessed; a comparison step in which the target evaporation rate of the liquefied gas is compared with the leakage amount of the liquefied gas; a shape design step in which the shape of the partial secondary barrier is designed; and an installation step in which the partial secondary barrier is installed.

The leakage standard set in the leakage standard setting step may comprise primary physical characteristics and a leakage rate of the liquefied gas selected in the liquefied gas selection step.

In the shape adoption step, the material, diameter, thickness, length, and volume of the partial secondary barrier may be set and a method of increasing the length of the partial secondary barrier may be adopted.

In the setting and assessment step, the target evaporation rate may be set and the leakage amount of the liquefied gas may be assessed based on a pipe shape and a length-dependent volume of the partial secondary barrier adopted in the shape adoption step.

In the comparison step, the target evaporation rate is compared with the leakage amount of the liquefied gas and, upon determining that the leakage amount of the liquefied gas is less than the target evaporation rate, the method returns to the shape adoption step.

In the shape adoption step, the length of the partial secondary barrier may be reset to be increased.

The partial secondary barrier may be provided in the form of a pipe having an internal space and may have a shape selected from among a straight line shape, a curved shape, a zigzag shape, a spring shape, and a radial shape to be increased in length.

In accordance with another aspect of the present invention, there is provided a ship comprising an insulation system connected to a liquefied gas storage tanks designed by the method according to another aspect of the present invention.

[Advantageous Effects]

Embodiments of the present invention provide an insulation system for liquefied gas storage tanks, which meets leakage standards by completely vaporizing leaked liquefied gas from a storage tank within a pipe-type partial secondary barrier, thereby eliminating the need for installation of a typical drip tray.

In addition, embodiments of the present invention provide an insulation system for liquefied gas storage tanks, especially for type B independent tanks, which does not require excessive space for installation of a partial secondary barrier and is free from spatial constraints.

In addition, embodiments of the present invention provide an insulation system for liquefied gas storage tanks, which employs a partial secondary barrier manufactured in various forms in consideration of conditions varying depending on the type of liquefied gas and changes in each procedural step through setting and assessment of an evaporation rate of liquefied gas.

[Description of Drawings]

FIG. 1 is a cross-sectional view of an installation region of a pipe-type partial secondary barrier in an insulation system for liquefied gas storage tanks according to one embodiment of the present invention.
FIG. 2(a), FIG. 2(b), FIG. 2(c), FIG. 2(d), FIG. 2(e), and FIG. 2(f) are exemplary views illustrating various shapes of partial secondary barriers used in the insulation system for liquefied gas storage tanks according to one embodiment of the present invention.
FIG. 3 is a schematic diagram illustrating a coupling structure of the insulation system for liquefied gas storage tanks according to one embodiment of the present invention.
FIG. 4 is a schematic diagram illustrating a coupling structure of the insulation system for liquefied gas storage tanks according to another embodiment of the present invention.
FIG. 5 is a flowchart of a process of designing a partial secondary barrier for type B independent liquefied gas storage tanks according to one embodiment of the present invention.
FIG. 6 is a flowchart of a method of designing an insulation system for type B independent liquefied gas storage tanks in consideration of an optimal shape of a partial secondary barrier according to one embodiment of the present invention.

[Best Mode]

The above and other aspects, features, and advantages of the present invention will become apparent from the detailed description of the following embodiments in conjunction with the accompanying drawings. It should be noted that like components will be denoted by like reference numerals throughout the specification. In addition, description of known functions and constructions which may unnecessarily obscure the subject matter of the present invention will be omitted.

It should be understood that the accompanying drawings are provided for the purpose of facilitating understanding of embodiments disclosed in this specification and are not intended to limit the technical concepts disclosed herein. In addition, it should be understood that the present invention encompasses all modifications, equivalents, and substitutions that fall within the spirit and scope of the invention.

In addition, it will be understood that, although the terms "first", "second", etc. may be used herein to describe various elements, components, regions, layers and/or sections, these elements, components, regions, layers and/or sections should not be limited by these terms. These terms are only used to distinguish one element, component, region, layer or section from another element, component, region, layer or section.

Herein, the term "liquefied gas" is intended to encompass all gas fuels generally stored in a liquid state, such as LNG, liquefied hydrogen, liquefied nitrogen, LPG, ethylene, and ammonia, and, for convenience of description, may also refer to gas fuels that are not in a liquid state due to heating or pressurization. This definition is equally applicable to boil-off gas. In addition, herein, the term "LNG" may be used in a comprehensive sense, including not only LNG in a liquid state but also LNG in a supercritical state, and the term "boil-off gas" may refer to not only gaseous boil-off gas but also liquefied boil-off gas.

In addition, herein, the terms "primary" and "secondary" are used to distinguish between a function of primarily sealing or insulating a storage tank storing LNG and a function of secondarily sealing or insulating the storage tank.

In addition, as a matter of convention, the term "upper" or "top" applied to elements of a storage tank refers to a direction towards the inside of the tank, regardless of gravitational orientation. Similarly, the term "lower" or "bottom" refers to a direction towards the outside of a storage tank, regardless of gravitational orientation.

Hereinafter, embodiments of the present invention will be described with reference to the accompanying drawings. In each drawing, the same reference numeral denotes the same component.

It should be noted that a ship provided with a liquefied gas storage tank described below includes not only a merchant ship that transports cargo from a starting point to a destination, but also an offshore structure that floats at a specific point at sea and performs specific tasks. In addition, it should be noted that, herein, the term "liquefied gas storage tank" refers to any type of tank that stores liquefied gas.

Structure of insulation system for liquefied gas storage tank

The present invention may be applied to a type B independent liquefied gas storage tank that includes a secondary barrier formed as a partial secondary barrier and requires liquid-tightness.

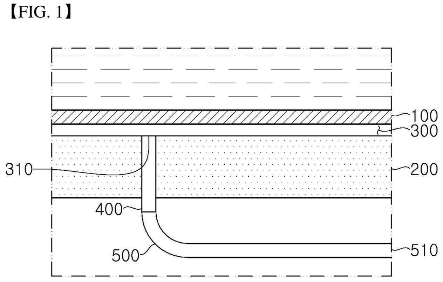

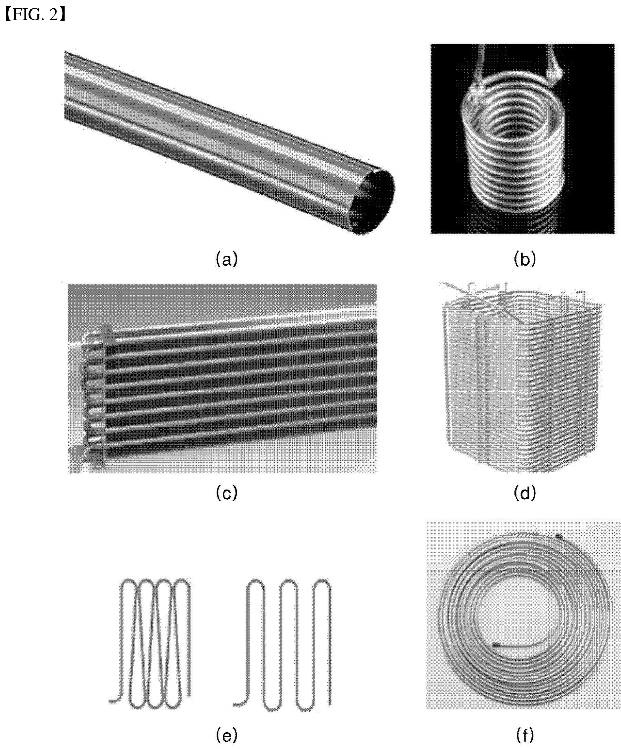

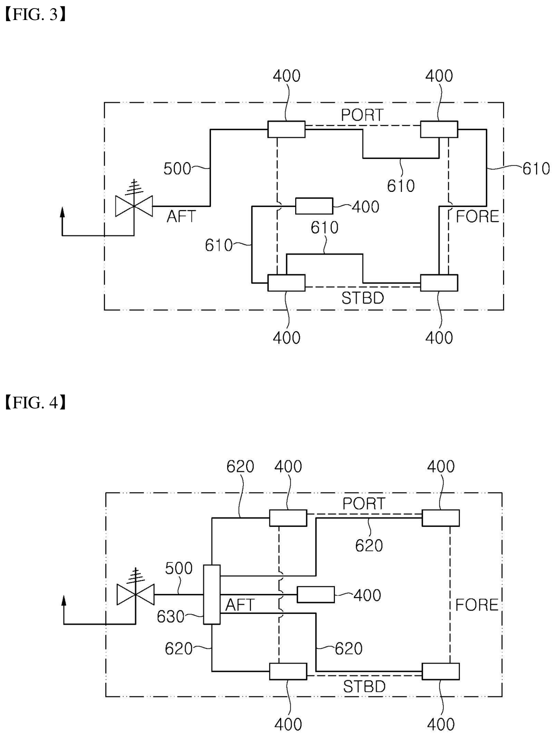

FIG. 1 is a cross-sectional view of an installation region of a pipe-type partial secondary barrier in an insulation system for liquefied gas storage tanks according to one embodiment of the present invention, FIG. 2(a), FIG. 2(b), FIG. 2(c), FIG. 3(d), FIG. 2(e), and FIG. 2(f) are exemplary views illustrating various shapes of partial secondary barriers used in the insulation system for liquefied gas storage tanks according to one embodiment of the present invention, FIG. 3 is a schematic diagram illustrating a coupling structure of the insulation system for liquefied gas storage tanks according to one embodiment of the present invention, and FIG. 4 is a schematic diagram illustrating a coupling structure of the insulation system for liquefied gas storage tanks according to another embodiment of the present invention.

Referring to FIG. 1, the insulation system for liquefied gas storage tanks according to this embodiment includes: a primary barrier 100 contacting a liquefied gas; an insulation layer 200 disposed outside the primary barrier 100; a leakage flow path 300 formed between the primary barrier 100 and the insulation layer 200 and allowing the liquefied gas leaked from the primary barrier 100 to flow therethrough; a leakage flow through-channel 400 inserted into the insulation layer 200, connected to the leakage flow path 300, and allowing the leaked liquefied gas to pass therethrough; and a partial secondary barrier 500 communicating with the leakage flow through-channel 400 and configured in the form of a pipe, wherein, in the event of leakage from the primary barrier 100, the leaked liquefied gas is completely vaporized while passing through the partial secondary barrier 500 configured in the form of a pipe.

Specifically, the primary barrier 100 of the insulation system for liquefied gas storage tanks according to the embodiment may be configured in a form that directly contacts and confines the liquefied gas, and may be formed of a metal suitable for characteristics of the liquefied gas, such as aluminum, nickel alloy steel, high manganese steel, stainless steel, and nickel.

The leakage flow path 300 of the insulation system for liquefied gas storage tanks according to the embodiment is formed between the primary barrier 100 and the insulation layer 200 and serves as a passage through which the liquefied gas leaked from the primary barrier 100 flows. Specifically, the leakage flow path 300 provides a space for conveyance of the liquefied gas in a liquid state that leaks from a storage tank due to damage to the primary barrier 100.

In addition, the leakage flow path 300 may have an outlet 310 formed in the direction of the insulation layer 200 to facilitate discharge of the leaked liquefied gas through the leakage flow through-channel 400 described below.

The leakage flow through-channel 400 of the insulation system for liquefied gas storage tanks according to the embodiment may be configured in the form of a small-diameter pipe that is inserted into and through the insulation layer 200 to communicate with the outlet 310 of the leakage flow path 300 and allow passage of the leaked liquefied gas therethrough. Specifically, since the leakage flow through-channel 400 is a channel that penetrates the insulation layer 200 and allows the leaked liquefied gas to flow to the outside of the storage tank therethrough, the leakage flow through-channel 400 may be formed of a material suitable for the characteristics of the liquefied gas. When the liquefied gas is LNG, the leakage flow through-channel is preferably formed of aluminum steel, stainless steel, or the like.

In addition, the leakage flow through-channel 400 of the insulation system for liquefied gas storage tanks according to the embodiment may include one or more leakage flow through-channels 400 inserted into the insulation layer 200 at different locations across the insulation layer 200 to ensure complete discharge of the liquefied gas leaked from the primary barrier 100 surrounding the storage tank.

The partial secondary barrier 500 of the insulation system for liquefied gas storage tanks according to the embodiment may be configured in the form of a pipe that communicates with the leakage flow through-channel 400. Specifically, the partial secondary barrier 500 according to the present invention may be connected at one end thereof to the leakage flow through-channel 400 and may be formed at the other end thereof with a gas opening 510 such that the leaked liquefied gas introduced into the partial secondary barrier 500 through the leakage flow through-channel 400 can be completely vaporized while flowing towards the gas opening 510. Specifically, the partial secondary barrier 500 may be connected in a liquid-tight manner to the leakage flow through-channel 400 by one of welding, threading, or bolting. As the leakage flow through-channel 400 is manufactured in the form of a small-diameter pipe, the partial secondary barrier 500 may also be manufactured in the form of a small-diameter pipe.

In addition, the partial secondary barrier 500 may be manufactured in the form of a long pipe to ensure complete vaporization of the leaked liquefied gas discharged from the leakage flow through-channel 400. That is, by increasing the length of the pipe through which the leaked liquefied gas flows, it is possible to increase an area available for heat transfer. To this end, various shapes as shown in FIG. 2 may be employed for the partial secondary barrier 500.

Dimensions of the partial secondary barrier 500, including length, diameter, and internal surface area, may be determined based on factors such as the diameter of the leakage flow through-channel 400, the size of the storage tank, the loading capacity of the storage tank, and the like.

In addition, the partial secondary barrier 500 of the insulation system for liquefied gas storage tanks according to the embodiment may be formed of a metallic barrier material suitable for the characteristics of the liquefied gas, preferably a material that can easily transfer heat due to metallic properties thereof.

As shown in FIG. 1, the partial secondary barrier 500 of the insulation system for liquefied gas storage tanks according to the embodiment may be partially formed with a bent portion, such as an "L" shape. This feature enables implementation of a structure allowing the partial secondary barrier 500 to be stably secured to and supported by the leakage flow through-channel 400. However, it should be understood that the position and shape of the partial secondary barrier 500 are not required to be particularly restricted and are appropriately altered or modified to conform to structural characteristics of a ship.

Referring to FIG. 2(a), FIG. 2(b), FIG. 2(c), FIG. 2(d), FIG. 2(e), and FIG. 2(f), the partial secondary barrier 500 according to the present invention may be formed in a shape selected from among a straight line shape (FIG. 2(a)), a circular spiral coil shape (FIG. 2(b)), a fin tube shape (FIG. 2(c)), a rectangular spiral coil shape (FIG. 2(d)), a zigzag shape (FIG. 2(e)), and a concentric coil shape (FIG. 2(f)). However, it should be understood that the present invention is not limited thereto and the partial secondary barrier 500 may have any shape that facilitates heat transfer. The partial secondary barrier 500 may be formed in a circular spiral coil shape, a rectangular spiral shape, or a concentric coil shape and may be arranged in series or in parallel. However, it should be understood that the present invention is not limited thereto and the partial secondary barrier 500 may be arranged in any form that ensures rapid heat transfer.

As such, since the partial secondary barrier 500 according to the present invention is configured in the form of a pipe, it is possible to eliminate the need for a drip tray typically installed to collect leaked liquefied gas, thereby effectively resolving various problems associated with installation of the drip tray (for example, unnecessary use of space in the ship, and the like).

In addition, since the partial secondary barrier 500 according to the present invention is configured in the form of a pipe with a significantly simplified structure compared to typical drip trays, it is possible to implement an insulation system free from spatial constraints. Specifically, a typical drip tray needs to be installed in a limited space due to the necessity of installing an additional insulation means to prevent cooling of nearby wall surfaces, whereas the pipe-type partial secondary barrier 500 according to the present invention can be mounted in a space-saving manner due to the structure allowing the partial secondary barrier 500 to be stably secured to and supported by the leakage flow through-channel 400, thereby enabling implementation of an insulation system free from spatial constraints.

As described above, the insulation system for liquefied gas storage tanks according to the embodiment is configured such that any liquefied gas introduced into the partial secondary barrier 500 is completely vaporized while flowing to the gas opening 510 formed at the other end of the partial secondary barrier 500 before being discharged to the outside. Here, the amount of liquefied gas vaporized can be estimated by calculating the amount of heat penetration into liquefied gas introduced into the partial secondary barrier 500 using the following equation:

$$\text{Leakage Rate} = Q/d \text{x} V \text{x} L \ (\text{vol.\%/H})$$

[Equation for calculation of evaporation rate of liquefied gas]

In the above equation, Q is the amount of heat penetration into the partial secondary barrier 500, d is the density of leaked liquefied gas, V is the volume of leaked liquefied gas, and L is the latent heat of leaked liquefied gas. Using this equation, it is possible to calculate the amount of heat penetration required to completely vaporize the liquefied gas introduced into the secondary barrier. Furthermore, based on the calculated required amount of heat penetration, it is possible to estimate the amount of liquefied gas completely vaporized and to determine the diameter or length of the partial secondary barrier 500 allowing passage of the liquefied gas therethrough.

In addition, the partial secondary barrier 500 of the insulation system for liquefied gas storage tanks according to the embodiment may be provided at the other end thereof with a pressure relief valve to block or control the flow of the liquefied gas through the partial secondary barrier 500. In addition, the degree of opening of the pressure relief valve may be adjusted using the above equation. Here, the pressure relief valve may be configured to be controlled based on the amount of the liquefied gas introduced into the partial secondary barrier 500.

The insulation system for liquefied gas storage tanks according to the embodiment may further include a connection pipe to completely collect the liquefied gas leaked from the primary barrier 100.

Referring to FIG. 3, the leakage flow through-channel 400 and the partial secondary barrier 500 of the insulation system for liquefied gas storage tanks according to the embodiment may be disposed on a bottom of the storage tank. Particularly, the leakage flow through-channel 400 may be disposed at several locations at a bottom of the storage tank to completely collect the liquefied gas leaked from the storage tank. In addition, the insulation system for liquefied gas storage tanks according to the embodiment may include one or more leakage flow through-channels 400 and one or more connection pipes 610 each connecting a pair of adjacent leakage flow through-channels 400. The connection pipe 610 may be configured to connect a plurality of leakage flow through-channels 400 in series and to convey the liquefied gas to the partial secondary barrier 500 disposed downstream thereof. Leaked liquefied gas discharged through one leakage flow through-channel 400 is partially vaporized while passing through a connection pipe 610 connected to another leakage flow through-channel 400 adjacent thereto and is completely vaporized while passing through the partial secondary barrier 500 connected to a farthest downstream one of the plurality of leakage flow through-channels 400 before being finally discharged to the outside.

FIG. 4 is a schematic view illustrating a coupling structure of an insulation system for liquefied gas storage tanks according to another embodiment of the present invention. In the embodiment described below, components identical or similar to those in the above embodiment will be denoted by the same or similar reference numerals, and detailed description thereof will be omitted, with reference to the description given above.

The leakage flow through-channel 400 of the insulation system for liquefied gas storage tanks according to this embodiment may be coupled to a corresponding connection pipe 620. Specifically, the insulation system for liquefied gas storage tanks according to this embodiment may include one or more leakage flow through-channels 400 each coupled to a corresponding one of one or more connection pipes 620. In addition, the connection pipes 620 connected to the respective leakage flow through-channels 400 may be integrated into a single line to be connected to the partial secondary barrier 500. Alternatively, leaked liquefied gas discharged from the plurality of leakage flow through-channels 400 may be collected in a separate leaked fluid collection device 630 and then delivered to the partial secondary barrier 500.

Consequently, in this embodiment, leaked liquefied gas discharged through the leakage flow through-channel 400 can be partially vaporized while being delivered to the partial secondary barrier 500 through the connection pipe 620 and can be completely vaporized through heat exchange while passing through the partial secondary barrier 500 before being finally discharged to the outside of a hull through a gas opening 510.

Method of designing insulation system for liquefied gas storage tank

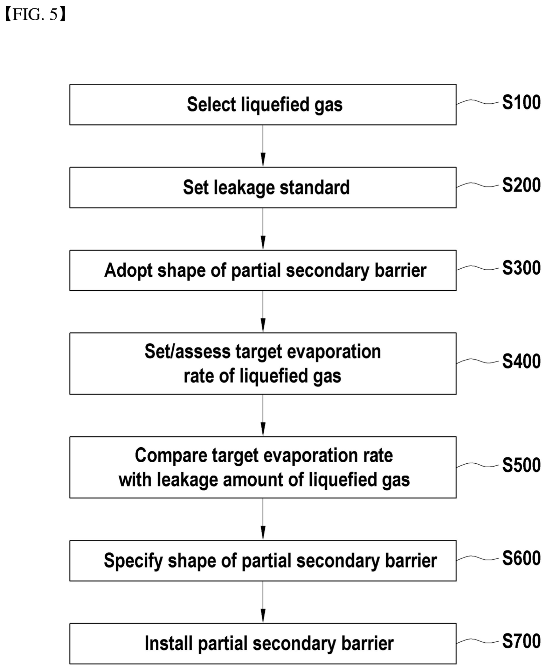

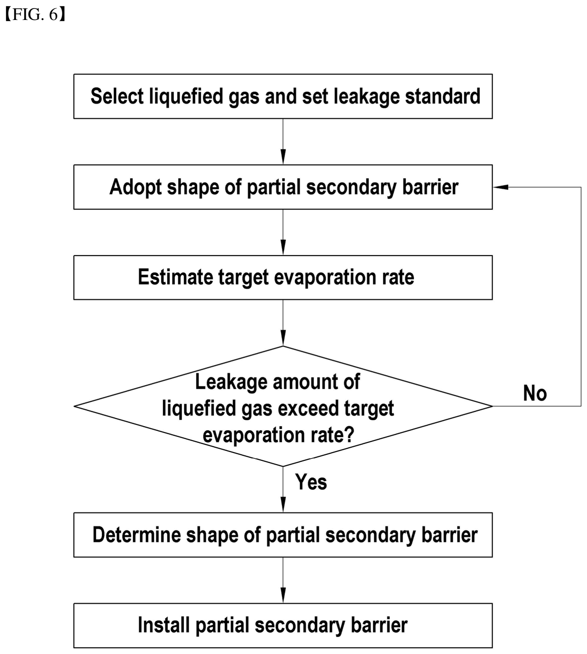

FIG. 5 is a flowchart of a process of designing a partial secondary barrier for type B independent liquefied gas storage tanks according to one embodiment of the present invention, and FIG. 6 is a flowchart of a method of designing an insulation system for type B independent liquefied gas storage tanks in consideration of an optimal shape of the partial secondary barrier according to one embodiment of the present invention.

The method of designing a partial secondary barrier of an insulation system for type B independent liquefied gas storage tanks includes: a liquefied gas selection step S 100 in which the type of liquefied gas is selected; a leakage standard setting step S200 in which a leakage standard for the liquefied gas is set; a shape adoption step S300 in which a shape of the partial secondary barrier is adopted; a setting and assessment step S400 in which a target evaporation rate of the liquefied gas is set and a leakage amount of the liquefied gas is assessed; a comparison step S500 in which the target evaporation rate of the liquefied gas is compared with the leakage amount of the liquefied gas; a shape design step S600 in which the shape of the partial secondary barrier is designed; and an installation step S700 in which the partial secondary barrier is installed.

In the liquefied gas selection step S100 of the method of designing a partial secondary barrier of an insulation system for type B independent liquefied gas storage tanks according to the present invention, the type of natural gas to be transported to a distant consumer is selected. For example, a liquefied gas selected in the selection step may be LNG at atmospheric pressure.

In the leakage standard setting step S200 of the method of designing a partial secondary barrier of an insulation system for type B independent liquefied gas storage tanks according to the present invention, a leakage standard for the liquefied gas is set in consideration of physical characteristics of the liquefied gas and a leakage rate of the liquefied gas. For example, the leakage standard for the liquefied gas at atmospheric pressure discharged from a leakage flow through-channel may be set to 200 L per hour.

In addition, in the liquefied gas selection step and the leakage standard setting step, not only are the type of liquefied gas and the leakage standard therefor set, but also all conditions under which an evaporation amount of the liquefied gas is measured may be set. For example, the temperature outside a storage tank is assumed to be -10°C and the partial secondary barrier is set to have no separate external insulator. Further, in order to accurately assess the evaporation rate of the liquefied gas, all the conditions are kept consistent, with the exception of the shape of a pipe.

In one embodiment, in the shape adoption step S300 of the method of designing a partial secondary barrier of an insulation system for type B independent liquefied gas storage tanks according to the present invention, the material, diameter, thickness, length, and volume of the partial secondary barrier are set based on the type of liquefied gas selected in the liquefied gas selection step and the leakage standard set in the leakage standard setting step. In some embodiments, the shape of the partial secondary barrier may be one selected from among straight line, coil, fin tube, and zigzag shapes to increase the length of the partial secondary barrier.

In one embodiment, in the setting and assessment step S400 of the method of designing a partial secondary barrier of an insulation system for type B independent liquefied gas storage tanks according to the present invention, a target evaporation rate of the liquefied gas is set and a leakage amount of the liquefied gas is assessed using the partial secondary barrier adopted in the shape adoption step.

Specifically, the target evaporation rate set in the setting and assessment step according to the present invention refers to an evaporation rate that ensures complete vaporization of leaked liquefied gas. For reference, the target evaporation rate may be specified according to design standards provided by classification societies, and the like, or may be assessed based on analysis of the extent of damage to a primary barrier of the storage tank.

In addition, in the setting and assessment step according to the present invention, the material, diameter, thickness, length, and volume of any partial secondary barrier adopted in the shape adoption step are set and the target evaporation rate of the liquefied gas is calculated. For example, if the leakage amount of the liquefied gas passing through the partial secondary barrier is less than the target evaporation rate, the partial secondary barrier may be manufactured with an increased length. Although it has been described that the evaporation amount of the liquefied gas is adjusted by increasing the length of the partial secondary barrier, it should be understood that the present invention is not limited thereto and the evaporation amount of the liquefied gas may be adjusted by varying the material or diameter of the partial secondary barrier.

The partial secondary barrier may be set to any desired length. For example, given a pipe-type partial secondary barrier manufactured with dimensions of 50A #40s, it is desirable that the partial secondary barrier be manufactured to a length of 105 m to ensure complete vaporization of leaked liquefied gas using the partial secondary barrier. Based on this design standard, the partial secondary barrier may be implemented in the form of a coil with about 167 turns based on a diameter of 200 mm.

In the comparison step S500 of the method of designing a partial secondary barrier of an insulation system for type B independent liquefied gas storage tanks according to the present invention, the target evaporation rate of the liquefied gas is compared with the leakage rate of the liquefied gas. If the leakage rate of the liquefied gas is less than the target evaporation rate, the process returns to the shape adoption step.

The shape design step S600 of the method of designing a partial secondary barrier of an insulation system for type B independent liquefied gas storage tanks according to the present invention includes completing the design of the partial secondary barrier by determining an optimal shape of the partial secondary barrier to achieve an evaporation rate close to the target evaporation rate. Specifically, the shape design step may include specifying the material, diameter, thickness, length, and volume of the partial secondary barrier and a method of increasing the length of the partial secondary barrier based on an evaporation rate ensuring complete vaporization of leaked liquefied gas introduced into an internal space of the partial secondary barrier.

In the installation step S700 of the method of designing a partial secondary barrier of an insulation system for type B independent liquefied gas storage tanks according to the present invention, the partial secondary barrier with the shape, length, and other dimensions thereof determined is actually installed.

The process of designing the partial secondary barrier of the insulation system for type B independent liquefied gas storage tanks according to one embodiment of the present invention proceeds in the following sequential steps.

FIG. 6 is a flowchart of a method of designing an insulation system for type B independent liquefied gas storage tanks in consideration of an optimal shape of a partial secondary barrier according to one embodiment of the present invention. The following description will be provided with reference to FIG. 6.

First, the type of liquefied gas leaked from a storage tank is selected and a leakage standard therefor is set. Specifically, a leakage standard for the selected liquefied gas is set in consideration of all conditions under which an evaporation amount of the liquefied gas is measured, physical characteristics of the liquefied gas, and an average evaporation rate of the liquefied gas. In addition, a target evaporation rate is set based on a desired evaporation rate of liquefied gas specified by classification societies or based on analysis of the extent of damage to a primary barrier of the storage tank. For reference, the target evaporation rate may be determined at any point in the process.

Subsequently, based on the leakage standard according to the present invention, the material, diameter, thickness, length, and volume of the partial secondary barrier are adopted. Then, a leakage amount of the liquefied gas is compared with the target evaporation rate. If the leakage amount of the liquefied gas is greater than or equal to the target evaporation rate, the adopted shape is specified as the shape of the partial secondary barrier and the partial secondary barrier is manufactured and installed. Conversely, if the leakage amount of the liquefied gas is less than the target evaporation rate, the process returns to the step of adopting the shape of the partial secondary barrier. After changing at least one of the material, diameter, thickness, length, and volume of the partial secondary barrier (for example, after increasing the length of the partial secondary barrier), the evaporation rate of the liquefied gas is assessed. This design method enables manufacture of a partial secondary barrier capable of completely vaporizing leaked liquefied gas and ensures implementation of various forms of partial secondary barriers reflecting conditions changed according to the design procedure.

In addition to the embodiments described above, the present invention encompasses all embodiments conceived from the combination of two or more of the embodiments or the combination of one or more of the embodiments with known techniques.

Although some embodiments have been described herein, it should be understood that these embodiments are provided for illustration only and are not to be construed in any way as limiting the present invention, and that various modifications, changes, alterations, and equivalent embodiments can be made by those skilled in the art without departing from the spirit of the invention.

It should be understood that any minor variations or alterations to the present invention are included within the scope of the invention, and the scope of protection of the invention will be clarified by the appended claims.

**Claims**

1. A method of designing an insulation system for type B independent liquefied gas storage tanks, comprising:

    a liquefied gas selection step in which the type of liquefied gas is selected;
    a leakage standard setting step in which a leakage standard for the liquefied gas is set;

    a shape adoption step in which a shape of a partial secondary barrier is adopted;
    a setting and assessment step in which a target evaporation rate of the liquefied gas is set and a leakage amount of the liquefied gas is assessed;
    a comparison step in which the target evaporation rate of the liquefied gas is compared with the leakage amount of the liquefied gas;
    a shape design step in which the shape of the partial secondary barrier is designed; and
    an installation step in which the partial secondary barrier is installed.

2. The method according to claim 1, wherein the leakage standard set in the leakage standard setting step comprises primary physical characteristics and a leakage rate of the liquefied gas selected in the liquefied gas selection step.

3. The method according to claim 1, wherein, in the shape adoption step, a material, diameter, thickness, length, and volume of the partial secondary barrier are set and a method of increasing the length of the partial secondary barrier is adopted.

4. The method according to claim 1, wherein, in the setting and assessment step, the target evaporation rate is set and the leakage amount of the liquefied gas is assessed based on a pipe shape and a length-dependent volume of the partial secondary barrier adopted in the shape adoption step.

5. The method according to claim 1, wherein, in the comparison step, the target evaporation rate is compared with the leakage amount of the liquefied gas and, upon determining that the leakage amount of the liquefied gas is less than the target evaporation rate, the method returns to the shape adoption step.

6. The method according to claim 5, wherein, in the shape adoption step, a length of the partial secondary barrier is reset to be increased.

7. The method according to claim 3, wherein the partial secondary barrier is provided in the form of a pipe having an internal space and has a shape selected from among a straight line shape, a curved shape, a zigzag shape, a spring shape, and a radial shape to be increased in length.

8. A ship comprising an insulation system for type B independent liquefied gas storage tanks designed by the method according to any one of claims 1 to 7.

【FIG. 1】

【FIG. 2】

(a)

(b)

(c)

(d)

(e)

(f)

【FIG. 3】

【FIG. 4】

【FIG. 5】

| | |
|---|---|
| Select liquefied gas | S100 |

↓

| | |
|---|---|
| Set leakage standard | S200 |

↓

| | |
|---|---|
| Adopt shape of partial secondary barrier | S300 |

↓

| | |
|---|---|
| Set/assess target evaporation rate of liquefied gas | S400 |

↓

| | |
|---|---|
| Compare target evaporation rate with leakage amount of liquefied gas | S500 |

↓

| | |
|---|---|
| Specify shape of partial secondary barrier | S600 |

↓

| | |
|---|---|
| Install partial secondary barrier | S700 |

【FIG. 6】

```
┌─────────────────────────────────────────┐
│ Select liquefied gas and set leakage standard │
└─────────────────────────────────────────┘
                    │
                    ▼
┌─────────────────────────────────────────┐
│ Adopt shape of partial secondary barrier │◄──┐
└─────────────────────────────────────────┘   │
                    │                          │
                    ▼                          │
┌─────────────────────────────────────────┐   │
│ Estimate target evaporation rate         │   │
└─────────────────────────────────────────┘   │
                    │                          │
                    ▼                          │
              Leakage amount of                │
           liquefied gas exceed target ────No──┘
              evaporation rate?
                    │
                   Yes
                    ▼
┌─────────────────────────────────────────┐
│ Determine shape of partial secondary barrier │
└─────────────────────────────────────────┘
                    │
                    ▼
┌─────────────────────────────────────────┐
│ Install partial secondary barrier        │
└─────────────────────────────────────────┘
```

## INTERNATIONAL SEARCH REPORT

| | International application No. |
|---|---|
| | **PCT/KR2023/020327** |

**A. CLASSIFICATION OF SUBJECT MATTER**

**B63B 71/00**(2020.01)i; **B63B 25/16**(2006.01)i; **G06F 30/15**(2020.01)i; **F17C 13/00**(2006.01)i; **F17C 3/02**(2006.01)i; **B63B 25/08**(2006.01)i

According to International Patent Classification (IPC) or to both national classification and IPC

**B. FIELDS SEARCHED**

Minimum documentation searched (classification system followed by classification symbols)

B63B 71/00(2020.01); B63B 25/16(2006.01); B63B 73/20(2020.01); B63B 73/60(2020.01); B65D 1/24(2006.01); F17C 1/00(2006.01); F17C 13/00(2006.01); F25B 45/00(2006.01); G01B 11/24(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 누수(leak), 탱크(tank), 배관(pipe), 기화(evaporation)

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0008430 A (KOREA SHIPBUILDING & OFFSHORE ENGINEERING CO., LTD. et al.) 28 January 2020 (2020-01-28) See paragraphs [0011]-[0014] and claim 7. | 1-8 |
| A | KR 10-2022-0141192 A (HYUNDAI HEAVY INDUSTRIES CO., LTD.) 19 October 2022 (2022-10-19) See paragraphs [0078]-[0105] and figures 4-5. | 1-8 |
| A | KR 10-2016-0075896 A (SAMSUNG HEAVY IND. CO., LTD.) 30 June 2016 (2016-06-30) See paragraphs [0030]-[0036] and [0055]-[0061]. | 1-8 |
| A | US 4245748 A (KVAMSDAL, Rolf) 20 January 1981 (1981-01-20) See claim 1 and figure 1. | 1-8 |
| A | JP 07-044920 Y2 (KUMAGAI, Yasuo) 11 October 1995 (1995-10-11) See paragraphs [0010]-[0012] and figure 1. | 1-8 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **20 March 2024** | **20 March 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2023/020327** |

| Patent document cited in search report | | | Publication date (day/month/year) | Patent family member(s) | | | Publication date (day/month/year) |
| --- | --- | --- | --- | --- | --- | --- | --- |
| KR | 10-2020-0008430 | A | 28 January 2020 | KR | 10-2107902 | B1 | 07 May 2020 |
| KR | 10-2022-0141192 | A | 19 October 2022 | KR | 10-2513637 | B1 | 27 March 2023 |
| KR | 10-2016-0075896 | A | 30 June 2016 | KR | 10-1644512 | B1 | 02 August 2016 |
| US | 4245748 | A | 20 January 1981 | DE | 2842554 | A1 | 26 April 1979 |
| | | | | DE | 2842554 | C2 | 31 March 1988 |
| | | | | JP | 54-071419 | A | 08 June 1979 |
| | | | | JP | 62-023198 | B2 | 21 May 1987 |
| JP | 07-044920 | Y2 | 11 October 1995 | JP | 07-026664 | U | 19 May 1995 |

Form PCT/ISA/210 (patent family annex) (July 2022)